# EUROPÄISCHE PATENTSCHRIFT

(11) **EP 2 140 188 B1**
(45) Veröffentlichungstag und Bekanntmachung des Hinweises auf die Patenterteilung: **01.08.2012**
(21) Anmeldenummer: 08716530.4
(22) Anmeldetag: 13.03.2008
(51) Int. Cl.: F16K 41/12

(54) **VENTIL ZUM TRENNEN VON PRODUKTMEDIEN IN ROHRLEITUNGEN EINER PRODUKTFÜHRENDEN ANLAGE**
VALVE FOR SEPARATING PRODUCT MEDIA IN THE PIPES OF A PRODUCT-CARRYING SYSTEM
SOUPAPE POUR SÉPARER DES MILIEUX DE PRODUITS DANS DES CANALISATIONS D'UNE INSTALLATION ACHEMINANT DES PRODUITS

(30) Priorität: 19.03.2007 DE 102007014282
(43) Veröffentlichungstag der Anmeldung: 06.01.2010
(73) Patentinhaber: SUEDMO HOLDING GMBH, 73469 Riesbuerg (DE)
(72) Erfinder: FRANZ, Stephan, 86720 Nördlingen (DE); NEUHAUSER, Frank, 73450 Elchingen (DE)
(74) Vertreter: Heuckeroth, Volker
(86) Internationale Anmeldenummer: PCT/EP2008/002034
(87) Internationale Veröffentlichungsnummer: WO 2008/113516

(56) Entgegenhaltungen:
- WO-A-96/27096
- DE-A1- 2 241 550
- DE-A1- 2 429 448
- DE-A1- 2 759 257
- DE-U- 20 211 511
- DE-U1- 29 507 639
- GB-A- 2 224 335
- US-B1- 6 685 164

## Beschreibung

Die Erfindung betrifft ein Ventil zum Trennen von Produktmedien in Rohrleitungen einer produktführenden Anlage, mit einem Ventilgehäuse, einem in einem Ventilgehäuseinneren des Ventilgehäuses angeordneten Ventilkörper, einem in axialer Richtung bewegbaren und mit dem Ventilkörper verbundenen Antriebselement zum Bewegen des Ventilkörpers, und mit einer Abdichtmanschette zum antriebsseitigen Abdichten des Ventilgehäuseinneren, wobei die Abdichtmanschette einen sich radial erstreckenden Manschettenkörper mit einer radial inneren Öffnung aufweist, durch die das Antriebselement hindurchreicht, wobei der Manschettenkörper einen radial äußeren Randbereich und einen radial inneren Randbereich aufweist, der die radial innere Öffnung umgibt, wobei der radial äußere Randbereich radial und der radial innere Randbereich axial eingespannt ist, wobei die Abdichtmanschette aus einem formstabilen Kunststoff gefertigt ist, der bis zumindest etwa 130°C temperaturbeständig ist, wobei ein erster Abschnitt des radial äußeren Randbereichs des Manschettenkörpers in einer axial verlaufenden, voll umfänglichen Aufnahme eines axial unbeweglichen Aufnahmelernents aufgenommen ist, und wobei der radial äußere Randbereich einen zweiten radial inneren Abschnitt aufweist, der zwischen einer Ventilgehäusewand des Ventilgehäuses und einer ersten Aufnahmeelementwand des Aufnahmeelements eingespannt ist.

Ein derartiges Ventil ist aus DE 202 11 511 U1 bekannt.

Das bekannte Ventil wird in einer produktführenden Anlage verwendet, um Produktmedien, die durch Rohrleitungen der produktführenden Anlage fließen, voneinander zu trennen. Eine solche produktführende Anlage kann bspw. eine lebensmitteltechnische Anlage sein, die fließfähige Produktmedien, wie z. B. Joghurt oder Saft, entlang den Rohrleitungen befördert.

Das bekannte Ventil weist einen in ein Ventilgehäuse eingesetzten Ventilkörper in Form eines Absperrorgans auf, um die Rohranschlussstutzen des Ventilgehäuses, die mit den Rohrleitungen der lebensmitteltechnischen Anlage verbunden sind, gegeneinander abzudichten. Das Absperrorgan des Ventilkörpers ist über ein Antriebselement zwischen einer geöffneten Ventilstellung und einer geschlossenen Ventilstellung bewegbar. In der geöffneten Ventilstellung können die Produktmedien von einem Rohranschlussstutzen über das Ventilgehäuseinnere in den anderen Rohranschlussstutzen des Ventilgehäuses übertreten. In der geschlossenen Ventilstellung dichtet das Absperrorgan die Rohranschlussstutzen gegeneinander ab, wodurch der Durchfluss des Produktmediums durch das Ventilgehäuseinnere unterbrochen ist.

Das bekannte Ventil arbeitet insbesondere bei lebensmitteltechnischen Anlagen unter aseptischen Bedingungen, so dass eine hermetische Abdichtung des Ventilgehäuseinneren gegenüber der Umgebung erforderlich ist. Hierzu weist das bekannte Ventil eine Abdichtmanschette auf, die das Ventilgehäuseinnere antriebsseitig abdichtet. Die Abdichtmanschette weist einen sich radial erstreckenden Manschettenkörper mit einer mittigen Öffnung auf und ist derart in das Ventil eingebaut, dass das mit dem Absperrorgan verbundene Antriebselement durch die Öffnung des Manschettenkörpers hindurch verläuft. Um die Abdichtmanschette im Ventil lagestabil zu halten, ist ein radial äußerer Randbereich des Manschettenkörpers radial zwischen einem axial unbeweglichen Aufnahmeelement und dem Ventilgehäuse und ein radial innerer Randbereich des Manschettenkörpers axial zwischen einem ersten und einem zweiten Element des Antriebselements eingespannt. Die bekannte Abdichtmanschette ist einstückig aus PTFE gefertigt.

Ein vergleichbares Ventil ist aus dem Firmenprospekt der SÜDMO Holding GmbH, Riesbürg, "SÜDMO SVP Ventile Modell 2000, Ventiltechnik für jeden Einsatzbereich", 2006, Seite 2, bekannt. Dieses bekannte Ventil weist eine Abdichtmanschette auf, die aus einem Elastomer, beispielsweise aus EPDM-Elastomer gefertigt ist. Das Material der Abdichtmanschette ist im Bereich des radial inneren und äußeren Randbereichs wulstartig verbreitert, um ein Halten der Abdichtmanschette zu bewirken, so dass im Betrieb des Ventils ein Verrutschen der Abdichtmanschette unter Zug- und Druckbelastung verhindert wird. Ferner wir durch den verbreiterten radial inneren und radial äußeren Randbereich eine Produktmedienhinterwanderung der Abdichtmanschette in ihren Einspannbereichen verhindert.

Ein Nachteil dieser Abdichtmanschette ist es, dass ihr Material mechanisch nicht stabil ausgebildet und die Lebensdauer des Elastomers unter hohen Temperatureinflüssen und Druckspritzen eingeschränkt ist. Hierdurch kann die Abdichtmanschette bei im Betrieb des Ventils wiederholt auftretenden Lastwechseln feine Haarrisse in ihren Einspannbereichen und in dem freiliegenden Manschettenkörper aufweisen und auch ohne vorherige Harrrissbildung reißen. Hierdurch werden häufige Wartungen des Ventils verursacht, die Stillstandzeiten und folglich erhöhte Betriebskosten der lebensmitteltechnischen Anlage bedingen.

Es ist ferner nachteilig, dass der Manschettenkörper der Abdichtmanschette nicht formstabil ausgebildet ist, wodurch ein zusätzliches Element, das Textilgewebe, zur Festigkeitserhöhung des Manschettenkörpers vorgesehen sein muss. Das mittige Einbetten des Textilgewebes in den Manschettenkörper ist während der Herstellung schwierig zu bewerkstelligen und führt zu einer kostenaufwändigen Herstellung der Abdichtmanschette.

Ein weiterer Nachteil ist es, dass das Elastomer nur in einem begrenzten Temperaturbereich temperaturbeständig ist. Dabei ist zu berücksichtigen, dass das Ventilgehäuseinnere und der Ventilkörper mit sehr heißen Reinigungsmedien, auch heißem Dampf, beaufschlagt werden. Hierbei können temperaturbedingt feine Haarrisse im Manschettenkörper auftreten. Die temperaturbedingte Schädigung des Elastomers schränkt die Verwendung des Ventils unter aseptischen Bedingungen erheblich ein. Insbesondere werden immer höhere Anforderungen an die Temperaturbeständigkeit der Abdichtmanschette gestellt, um wartungsbedingte Unterbrechungen aufgrund eines Austauschs der Abdichtmanschette zu verringern.

Aus DE-A 24 29 448 ist ein membranabgedichtetes Ventil bekannt, dessen Abdichtmanschette aus PTFE gefertigt ist. Bei diesem bekannten Ventil ist die Abdichtmanschette sowohl in ihrem radial äußeren Randbereich als auch in ihrem radial inneren Randbereich axial eingespannt.

Aus DE-U 295 07 639 ist ein Ventil bekannt, das eine Abdichtmanschette aufweist, das beispielsweise aus verschiedenen Elastomeren, beispielsweise Silikon, Viton, PTFE oder EPDM bestehen kann. Die Abdichtmanschette dieses bekannten Ventils weist einen radial äußeren Randbereich und einen radial inneren Randbereich auf, die jeweils axial eingespannt sind. Der radial äußere Randbereich und der radial innere Randbereich der Abdichtmanschette weitet sich jeweils in axialer Richtung radial nach innen bzw. radial nach außen auf.

Aus GB-A 2 224 335 ist ein Ventil mit einer Abdichtmanschette bekannt, die aus mehreren Schichten aus Metall aufgebaut ist. Die Abdichtmanschette ist in ihrem radial inneren Bereich und ihrem radial äußeren Randbereich axial eingespannt.

Aus DE-A-2 241 550 ist ein Ventil mit einer Abdichtmanschette bekannt, wobei für die Abdichtmanschette Werkstoffe gewählt werden können, die Metall, gewebeverstärkter Kunststoff oder Teflon (PTFE) sein können.

WO-A-96/27096 offenbart ein Ventil mit einer Abdichtmanschette, die in ihrem radial äußeren Randbereich schräg verlaufend axial eingespannt ist, wobei die Festlegung und Abdichtung der Abdichtmanschette durch sich axial erstreckende Zähne, die in die Abdichtmanschette gedrückt werden, verbessert werden soll.

Es ist eine Aufgabe der vorliegenden Erfindung, ein Ventil der eingangs genannten Art dahingehend weiterzubilden, dass die Lagestabilität der Abdichtmanschette erhöht ist.

Erfindungsgemäß wird die Aufgabe hinsichtlich des eingangs genannten Ventils dadurch gelöst, dass die erste Aufnahmeelementewand einen Vorsprung aufweist, der im Bereich des zweiten Abschnitts des radial äußeren Randbereichs des Manschettenkörpers angeordnet ist.

Die Ausgestaltung der Manschette aus einem formstabilen Kunststoff ermöglicht vorteilhafterweise eine Verwendung der Abdichtmanschette im Ventil ohne zusätzliche Verstärkungselemente wie das aus dem Stand der Technik bekannte Textilgeflecht zur Festigkeitserhöhung der Abdichtmanschette. Hierbei weist der formstabile Kunststoff eine erhöhte Festigkeit unter Zug- und Druckbelastungen auf. Erfindungsgemäß ist unter einer Abdichtmanschette aus "formstabilem" Kunststoff zu verstehen, dass die Abdichtmanschette ihre geometrische Form beibehält, wenn keine Kräfte auf die Abdichtmanschette wirken, und dass bei auf die Abdichtmanschette wirkenden Biegekräften diese sich elastisch verformen kann.

Die Ausgestaltung der Abdichtmanschette aus einem bis zumindest etwa 130°C temperaturbeständigen Kunststoff erweitert vorteilhafterweise die Temperaturbeständigkeit der Abdichtmanschette im Vergleich zu der EPDM-Elastomer-Abdichtmanschette und ermöglicht vorteilhafterweise einen Einsatz des erfindungsgemäßen Ventils in lebensmitteltechnischen Anlagen, bei denen oftmals bis zu bspw. 120°C heiße Medien durch die Rohrleitungen und das erfindungsgemäße Ventil fließen. Es wird eine temperaturbedingte Beschädigung der Abdichtmanschette in Form von Haarrissen oder auch Bruchstellen verhindert, wodurch vorteilhafterweise Wartungskosten des erfindungsgemäßen Ventils aufgrund eines möglichen Austauschs der Abdichtmanschette und somit Stillstandzeiten der lebensmitteltechnischen Anlage vermieden werden.

Ein erster Abschnitt des radial äußeren Randbereichs des Manschettenkörpers ist in einer axial verlaufenden, vollumfänglichen Aufnahme eines axial unbeweglichen Aufnahmeelements aufgenommen.

Das erfindungsgemäße Ventil weist antriebsseitig ein Aufnahmeelement zum Aufnehmen der Abdichtmanschette auf, das mit einer Aufnahme, bspw. einer Nut, versehen ist, in die der radial äußere Randbereich des Manschettenkörpers aufgenommen ist. Die Anordnung des ersten Abschnitts des radial äußeren Randbereichs des Manschettenkörpers in der Aufnahme bewirkt eine zentrierte Positionierung der Abdichtmanschette im Ventil, wodurch die Abdichtmanschette vorteilhafterweise gegenüber radialen Verschiebungen lagestabil gehalten wird.

Die Abdichtmanschette ist hierbei konstruktiv derart ausgelegt, dass sie bei ihrem Einbau in das erfindungsgemäße Ventil während des Verfahrens des Ventiltellers selbständig ohne weitere technische Maßnahmen in die Aufnahme eingeführt und positioniert werden kann, so dass der Einbau der Abdichtmanschette in das Ventil vorteilhafterweise besonders einfach und mit wenig Personalkosten durchgeführt werden kann.

Der radial äußere Randbereich der Abdichtmanschette weist einen zweiten radial inneren Abschnitt auf, der zwischen einer Ventilgehäusewand des Ventilgehäuses und einer ersten Aufnahmeelementwand des Aufnahmeelements eingespannt ist.

Das Verklemmen des zweiten Abschnitts des radial äußeren Randbereichs zwischen einer Ventilgehäusewand und einer Aufnahmewand bewirkt ein konstruktiv einfaches Halten der in die Aufnahme eingesteckten Abdichtmanschette im Ventil ohne zusätzliche Hilfsmaßnahmen, so dass vorteilhafterweise ein Herausrutschen des ersten Abschnitts des radial äußeren Randbereichs der Abdichtmanschette aus der Aufnahme verhindert wird. Ferner verhindert das Verspannen des zweiten Abschnitts des radial äußeren Randbereichs zwischen der Ventilgehäusewand und der ersten Aufnahmeelementwand eine Hinterwanderung der Abdichtmanschette mit Produktmedien oder Reinigungsmedien in diesem Bereich.

Die erste Aufnahmeelementwand weist einen Vorsprung auf, der im Bereich des zweiten Abschnitts des radial äußeren Randbereichs des Manschettenkörpers angeordnet ist.

Der Vorsprung der ersten Aufnahmeelementwand drückt sich in den Manschettenkörper, wodurch vorteilhafterweise die Klemmwirkung der Abdichtmanschette im Bereich des Vorsprungs verbessert und die Lagestabilität der Abdichtmanschette erhöht wird. Hierdurch wird die Abdichtwirkung der Abdichtmanschette verbessert.

In einer bevorzugten Ausgestaltung der Erfindung ist der Kunststoff der Abdichtmanschette bis zumindest etwa 150°C, vorzugsweise bis zumindest etwa 165°C, weiter vorzugsweise bis zumindest etwa 180°C temperaturbeständig.

Diese Maßnahme erhöht die Temperaturbeständigkeit der Abdichtmanschette weiter, weil die üblichen, maximal auftretenden Betriebstemperaturen weit unterhalb der Temperaturbeständigkeitsgrenze liegen. Hierdurch werden ebenfalls die wartungsbedingten Unterbrechungen der lebensmitteltechnischen Anlage verringert.

In einer weiteren bevorzugten Ausgestaltung der Erfindung ist der Kunststoff der Abdichtmanschette chemisch beständig.

Da die durch die Rohrleitungen fließenden Medien, insbesondere Reinigungsmedien, chemisch aggressiv gegenüber dem Material der Abdichtmanschette sein können, wird durch die chemische Beständigkeit der Abdichtmanschette vorteilhafterweise ihre lange Haltbarkeit erreicht und die Zeitspanne zwischen den Wartungen des Ventils erheblich verlängert und gleichzeitig kostenintensive wartungsbedingte Unterbrechungen der lebensmitteltechnischen Anlage vermieden.

In einer weiteren bevorzugten Ausgestaltung ist der Kunststoff der Abdichtmanschette ein vernetzter Schichtkunststoff.

Hierdurch ist der Manschettenkörper vorteilhafterweise besonders formstabil und unter Zug- und Druckbelastungen mechanisch haltbar. Ferner verhindert die schichtartige Anordnung des Materials, dass sich der Manschettenkörper im Laufe der Zeit ausdehnt und die Abdichtmanschette ihre Form verliert.

Vorzugsweise ist die Abdichtmanschette aus einer Klasse von Materialien, zu denen Gylon® gehört, gefertigt.

Diese Klasse der Materialien, insbesondere Gylon®, sind auf der Basis von PTFE-Kunststoff gebildet und weisen einen Schichtaufbau auf, wodurch die Abdichtmanschette vorteilhafterweise eine hohe Druckstandfestigkeit und ein hohes Rückfeder- und Ausgleichsvermögen bei gleichzeitiger großer chemischer Beständigkeit aufweist.

In einer weiteren bevorzugten Ausgestaltung der Erfindung ist eine Breite der Aufnahme geringfügig größer als eine Dicke des Manschettenkörpers.

Diese Maßnahme bewirkt, dass der erste Abschnitt des radial äußeren Randbereichs des Manschettenkörpers, die insbesondere als Schichtmaterial eine homogene Dicke aufweist, besonders leicht in die Aufnahme eingeführt werden kann, wodurch der Einbau der Abdichtmanschette in das erfindungsgemäße Ventil besonders einfach durchgeführt werden kann.

In einer weiteren bevorzugten Ausgestaltung der Erfindung ist die Aufnahme zum Ventilgehäuseinneren hin offen.

Diese Maßnahme bewirkt, dass der Manschettenkörper vollständig auf der dem Ventilgehäuseinneren zugewandten Seite der Aufnahme angeordnet. Diese Anordnung ermöglicht vorteilhafterweise eine besonders gute Abdichtwirkung der Abdichtmanschette, weil der Druck im Ventilgehäuseinneren die Abdichtmanschette gegen ihren Sitz drückt.

In einer weiteren bevorzugten Ausgestaltung der Erfindung liegt der zweite Abschnitt des radial äußeren Randbereichs an der ersten Aufnahmeelementwand an.

Diese Maßnahme bewirkt, dass die Abdichtmanschette in ihrem Klemmbereich gegenüber Biegungen des Manschettenkörpers unter Zug- und Druckbelastungen geschützt wird, so dass der Kunststoffmanschettenkörper nicht brechen kann.

In einer weiteren bevorzugten Ausgestaltung der Erfindung sind die Ventilgehäusewand und die erste Aufnahmeelementwand zum Ventilgehäuseinneren hin geneigt, wobei ein Neigungswinkel α der Ventilgehäusewand relativ zu einer radialen Richtung größer als ein Neigungswinkel β der ersten Aufnahmeelementwand relativ zur radialen Richtung ist.

Hierdurch wird der zweite Abschnitt des radial äußeren Randbereichs des Manschettenkörpers in seinem Krümmbereich vorteilhafterweise besonders stark an die erste Aufnahmeelementwand angepresst und der Manschettenkörper auch bei hohen Lastbeanspruchungen lagestabil gehalten und eine Hinterwanderung des Klemmbereichs mit Produktmedium verhindert.

In einer weiteren bevorzugten Ausgestaltung der Erfindung ist der Vorsprung vollumfänglich ausgebildet.

Die vollumfängliche Ausgestaltung des Vorsprungs bewirkt eine besonders gute Verklemmung des Manschettenkörpers entlang seiner gesamten Umfangs, wodurch vorteilhafterweise die Abdichtwirkung der Abdichtmanschette besonders gut ist.

In einer weiteren bevorzugten Ausgestaltung der Erfindung weist die Ventilgehäusewand im Bereich des zweiten Abschnitts des radial äußeren Randbereichs eine Riffelung mit zumindest einer Rippe auf, die in das Material der Abdichtmanschette formschlüssig eingreift.

Die Riffelung der Ventilgehäusewand bewirkt ein formschlüssiges Halten der Abdichtmanschette, da sich die Rippen der Riffelung in das Material der Abdichtmanschette eindrücken. Hierdurch wird vorteilhafterweise die Abdichtmanschette noch besser gegen ein Herausrutschen aus der Aufnahme des Aufnahmeelements gesichert.

In einer weiteren bevorzugten Ausgestaltung der Erfindung weist die Aufnahmeelementwand im Bereich des zweiten Abschnitts des radial äußeren Randbereichs der Abdichtmanschette eine Riffelung mit zumindest einer Rippe auf, die in das Material der Abdichtmanschette formschlüssig eingreift.

Die Riffelung der Aufnahmeelementwand bewirkt ebenfalls ein formschlüssiges Halten der Abdichtmanschette, da das Material der Abdichtmanschette plastisch verformt wird, indem die Rippen der Riffelung in das Material der Abdichtmanschetten eingreifen.

In einer weiteren bevorzugten Ausgestaltung der Erfindung ist die Riffelung der ersten Aufnahmeelementwand auf einer Oberfläche des Vorsprungs angeordnet.

Diese Maßnahme hat den Vorteil, dass die Abdichtmanschette noch sicherer im Ventil gehalten wird, da die Rippen der Riffelung im Klemmbereich des radial äußeren Randbereichs in die Abdichtmanschette eingreifen.

In einer weiteren bevorzugten Ausgestaltung der Erfindung verlaufen die zumindest eine Rippe der Riffelung der Ventilgehäusewand und/oder der Aufnahmeelementwand in Umfangsrichtung.

Der Verlauf der Rippen der Riffelungen in Umfangsrichtung, d.h. quer zur axialen Richtung des Ventils, bewirkt ein besonders gutes Halten der Abdichtmanschette gegenüber einem bspw. axialen Verlauf der Rippen, da der Formschluss zwischen den Rippen der Riffelungen und dem Material der Abdichtmanschette quer zur im Betrieb des Ventils auftretenden Zugbeanspruchung des Manschettenkörpers erreicht wird. Hierdurch wird vorteilhafterweise ein Verrutschen der Abdichtmanschette noch sicherer verhindert.

In einer weiteren bevorzugten Ausgestaltung der Erfindung sind die zumindest eine Rippe der Riffelung der Ventilgehäusewand und/oder der Aufnahmeelementwand vollumfänglich ausgebildet.

Die vollumfängliche Ausgestaltung der Rippen der Riffelungen bewirkt vorteilhafterweise eine besonders optimale Lagestabilität des Manschettenkörpers, so dass die Dichtwirkung der Abdichtmanschette entlang des Umfangs des Manschettenkörpers gleichermaßen gut ist.

In einer weiteren bevorzugten Ausgestaltung der Erfindung ist der radial innere Randbereich der Abdichtmanschette zwischen einem ersten Element und einem zweiten Element des Antriebselements eingespannt, wobei eine zum Manschettenkörper gewandte Stirnseite des ersten Elements einen zum Manschettenkörper hin gewandten Vorsprung aufweist, der in den radial inneren Randbereich des Manschettenkörpers eingreift.

Die axiale Verklemmung des radial inneren Randbereichs des Manschettenkörpers wird vorteilhafterweise konstruktiv sehr einfach erzielt, da der radial innere Randbereich zwischen den jeweiligen zueinander weisenden Stirnseiten des ersten und zweiten Elements eingespannt ist und die Stirnseiten beider Elemente in axialer Richtung gegeneinander drücken. Ferner bewirkt diese Art der Verklemmung, dass das Ventil im Bereich des radial inneren Randbereichs des Manschettenkörpers besonders einfach ausgebildet sein kann, da keine zusätzlichen Verklemmelemente für die Abdichtmanschette notwendig sind.

Bei einem Einspannen des radial inneren Randbereichs des Manschettenkörpers zwischen dem ersten und zweiten Element des Antriebselements greift der Vorsprung in das Material der Abdichtmanschette ein, wodurch vorteilhafterweise eine optimale axiale Verklemmung des radial inneren Randbereichs und somit eine hohe Dichtigkeit der Abdichtmanschette erreicht wird. In diesem Zusammenhang ist es bevorzugt, dass die Stirnseite des zweiten Elements radial eben ausgebildet ist, da eine Presswirkung der Stirnseite des zweiten Elements entlang der gesamten Ausdehnung der Stirnseite des zweiten Elements homogen ist. Ferner ermöglicht die Anordnung des Vorsprung an der Stirnseite des ersten Elements vorteilhafterweise eine radiale Verklemmung eines radial inneren Rands des radial inneren Randbereichs mit dem Antriebselement, da das vom Vorsprung zusammengedrückte Material zum inneren Rand des radial inneren Randbereichs des Manschettenkörpers fließen und dort auf das Antriebselement drücken kann.

In einer weiteren bevorzugten Ausgestaltung der Erfindung ist der Vorsprung von einem inneren Rand des radial inneren Randbereichs des Manschettenkörpers beabstandet.

Die Beabstandung des Vorsprungs von einem inneren Rand des radial inneren Randbereichs des Manschettenkörpers bewirkt, dass der Formschluss des radial inneren Randbereichs und des Materials der Abdithtmanschette beabstandet von dem inneren Rand des radial inneren Randbereichs erreicht wird, wodurch eine Produktmedienhinterwanderung im Klemmbereich vorteilhafterweise verhindert wird, die eine Schädigung des Materials der Abdichtmanschette im Klemmbereich verursachen könnte. Hierdurch wird vorteilhafterweise die Haltbarkeit der Abdichtmanschette erhöht.

In einer weiteren bevorzugten Ausgestaltung der Erfindung ist der Vorsprung vollumfänglich ausgebildet.

Diese Maßnahme hat den Vorteil, dass eine besonders hohe Dichtwirkung der Abdichtmanschette nach allen Seiten erreicht wird, da der Formschluss des radial inneren Randbereichs des Manschettenkörpers und des Materials der Abdichtmanschette vollumfänglich bewirkt wird.

In einer weiteren bevorzugten Ausgestaltung der Erfindung ist ein Bereich der Stirnseite des ersten Elements, die zum radial inneren Rand des radial inneren Randbereichs des Manschettenkörpers benachbart ist, radial nach innen gesehen abgerundet.

Diese Maßnahme ermöglicht vorteilhafterweise ein Fließen des durch den Vorsprung zusammengedrückten Materials der Abdichtmanschette radial nach innen, so dass jenes den Raum zwischen dem abgerundeten Bereich der Stirnseite des ersten Elements und dem Antriebselement auffüllen kann und die radiale Verklemmung des radial inneren Rands des radial inneren Randbereichs an der antriebsseitigen Fläche der Abdichtmanschette auftritt.

Weitere Vorteile und Merkmale ergeben sich aus der nachfolgenden Beschreibung und der beigefügten Zeichnung.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Die Erfindung wird nachfolgend anhand einiger ausgewählter Ausführungsbeispiele in Zusammenhang mit der beiliegenden Zeichnung näher beschrieben und erläutert. Es zeigen:
- Fig. 1: ein erfindungsgemäßes Ventil;
- Fig. 2: eine Abdichtmanschette des erfindungsgemäßen Ventils in Fig. 1;
- Fig. 3: eine vergrößerte Ansicht des Ventils in Fig. 1 im Bereich eines radial äußeren Randbereichs eines Manschettenkörpers der Abdichtmanschette in Fig. 2;
- Fig. 4: eine weitere vergrößerte Ansicht des Ventils in Fig. 1 im Bereich eines radial inneren Randbereichs des Manschettenkörpers der Abdichtmanschette in Fig. 2;
- Fig. 5A-5C: Einbaustadien der Abdichtmanschette in Fig. 2 in das erfindungsgemäße Ventil in Fig. 1; und
- Fig. 6A, 6B: zwei Betriebszustände des erfindungsgemäßen Ventils in Fig. 1.

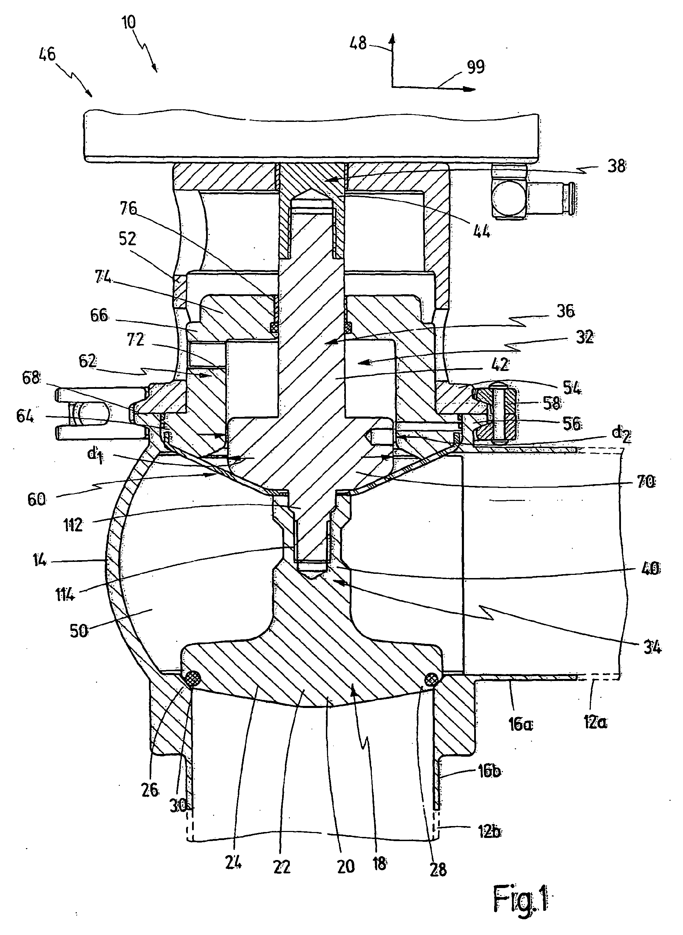

In Fig. 1 ist ein mit dem allgemeinen Bezugszeichen 10 versehenes Ventil dargestellt. Das Ventil wird in einer produktführenden Anlage, bspw. in einer lebensmitteltechnischen Anlage, verwendet, um Produktmedien, wie z. B. Joghurt oder Saft, die durch Rohrleitungen 12a, b der lebensmitteltechnischen Anlage fließen, voneinander zu trennen. Das Ventil ist bspw. als aseptisches, rechtwinkliges Ventil der Bauart SVP-S371 ausgebildet.

Das Ventil 10 weist ein im Wesentlichen kugelförmiges Ventilgehäuse 14 mit zwei zueinander senkrecht verlaufenden Rohranschlussstutzen 16a, b auf, die mit den Rohrleitungen 12a, b der lebensmitteltechnischen Anlage verbunden sind. Im Ventilgehäuse 14 ist ein Ventilkörper 18 eingesetzt, der ein Absperrorgan 20 in Form eines Ventiltellers 22 aufweist. Der Ventilteller 22 kann auf seiner dem Rohranschlussstutzen 16b zugewandten Seite 24 mit einem vollumfänglich ausgebildeten Ventilsitz 26 des Ventilgehäuses 14 in Eingriff kommen. In einem äußeren Randbereich 28 des Ventiltellers 22 ist eine Ringdichtung 30 angeordnet, um die Dichtwirkung zwischen dem Ventilteller 22 und dem Ventilsitz 26 zu erhöhen.

Der Ventilteller 22 ist mit einem mehrteiligen Antriebselement 32 verbunden, das drei Elemente im Form eines Schafts 40, einer Spindel 42 und eines Innenschafts 44 aufweist. Das Antriebselement 32 ist Teil eines Stellantriebs 46, der bspw. pneumatisch eine Bewegung des Ventiltellers 22 in axialer Richtung 48 bewirkt. Der Ventilteller 22 und der Schaft 40 sind einstückig ausgebildet. Der Schaft 40 und die Spindel 42 sowie die Spindel 42 und der Innenschaft 22 sind miteinander verschraubt.

Durch Bewegen des Antriebselements 32 in axialer Richtung 48 kann der Ventilteller 22 vom Ventilsitz 26 angehoben und in das Ventilgehäuseinnere 50 hin bewegt oder auf dem Ventilsitz 26 abgesetzt werden, wodurch das Ventil 10 geöffnet bzw. geschlossen wird. In einer geöffneten Ventilstellung ist ein Durchfluss des Produktmediums von der Rohrleitung 12a über die Rohranschlussstutzen 16a, b und das Ventilgehäuseinnere 50 in die Rohrleitung 12b ermöglicht. Bei geschlossener Ventilstellung sitzt der äußere Randbereich 28 des Ventiltellers 22 auf dem Ventilsitz 26 auf, so dass der Übertritt der Produktmedien zwischen den Rohrleitungen 12a, b verhindert ist.

Der Stellantrieb 46 weist ein Stellantriebgehäuse 52 auf, das über einen Stellantriebgehäuseflansch 54 mit einem Ventilgehäuseflansch 56 des Ventilgehäuses 14 verbunden ist. Ein nötiger Anpressdruck beider Flansche 54, 56 wird über einen Spannring 58 ermöglicht.

Das Ventil 10 weist ferner eine Abdichtmanschette 60 zum antriebsseitigen Abdichten des Ventilgehäuseinneren 50 auf, die in einem zylinderförmigen, einseitig geschlossenen Aufnahmeelement 62 aufgenommen ist.

Das Aufnahmeelement 62 ist axial unbeweglich im Ventil 10 angeordnet. Dazu ist ein zur Abdichtmanschette 60 gewandter Aufnahmeelementendbereich 64 einer Mantelfläche 66 des Aufnahmeelements 62 radial nach außen verbreitert und liegt an einer Unterseite 68 des Stellantriebgehäuseflansches 54 an. Das Aufnahmeelement 62 dient gleichzeitig als axiale Führung der Spindel 42. Ein in Richtung des Schafts 40 des Antriebselements 32 weisender Spindelendbereich 70 ist derart verbreitert, dass sein Außendurchmesser d₁ geringfügig kleiner als ein Innendurchmesser d₂ der Mantelfläche 66 des Aufnahmeelements 62 ausgebildet ist, so dass der Spindelendbereich 70 stets zentriert entlang einer Innenseite 72 der Mantelfläche 66 des Aufnahmeelements 62 geführt wird. Das Aufnahmeelement 62 weist ferner in seinem Boden 74 eine Durchbohrung 76 auf, durch die die Spindel 42 hindurch verläuft.

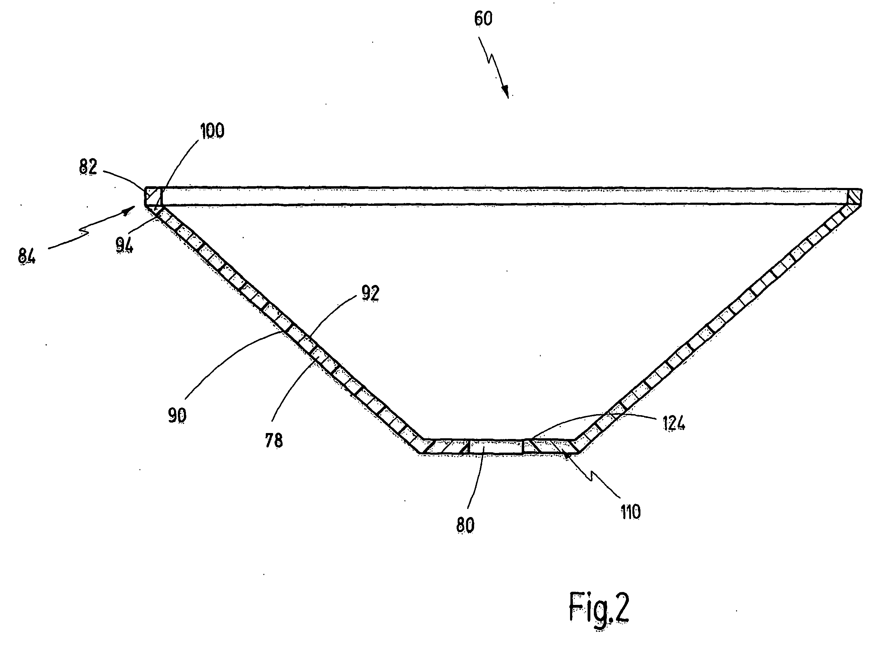

Fig. 2 zeigt die Abdichtmanschette 60 in Alleinstellung. Die Abdichtmanschette 60 weist einen sich radial erstreckenden Manschettenkörper 78 auf, der etwa mittig eine radial innere, bspw. kreisförmige Öffnung 80 aufweist, durch die das Antriebselement 32 hindurch verläuft (vgl. Fig. 1). Eine ursprüngliche Form des Manschettenkörpers 78 der Abdichtmanschette 60 vor ihrem Einbau in das Ventil 10 ist trichterförmig ausgestaltet. Es ist ebenfalls möglich, dass sich der Manschettenkörper 78 der Abdichtmanschette 60 in einer Ebene erstreckt.

Die Abdichtmanschette 60 ist aus einem formstabilen Kunststoff gefertigt, wodurch die Abdichtmanschette 60 eine erhöhte Festigkeit aufweist und kein zusätzliches Verstärkungselement zum Verstärken der Abdichtmanschette 60 gegenüber im Betrieb des Ventils 10 auftretenden Zug- und Druckbelastungen erforderlich ist. Der Kunststoff ist ein vernetzter Schichtkunststoff, so dass der Manschettenkörper 78 mechanisch besonders haltbar ist. Der Kunststoff ist bis zumindest etwa 130°C, vorzugsweise bis zumindest etwa 150°C, weiter vorzugsweise bis zumindest etwa 165°C und noch weiter vorzugsweise bis zumindest etwa 180°C temperaturbeständig, so dass die Abdichtmanschette 60 bei solchen Ventilen 10 verwendet werden kann, die aufgrund von durch das Ventil 10 fließenden heißen Reinigungs- und Sterilmedien selbst erwärmen. Der Kunststoff ist auch chemisch beständig, um eine chemische Stabilität der Abdichtmanschette 60 bei Durchfluss von aggressiven Medien, insbesondere die Reinigungsmedien durch das Ventilgehäuseinnere 50 zu gewährleisten. Die Abdichtmanschette 60 ist aus einer Klasse von Materialien, zu denen Gylon® gehört, gefertigt.

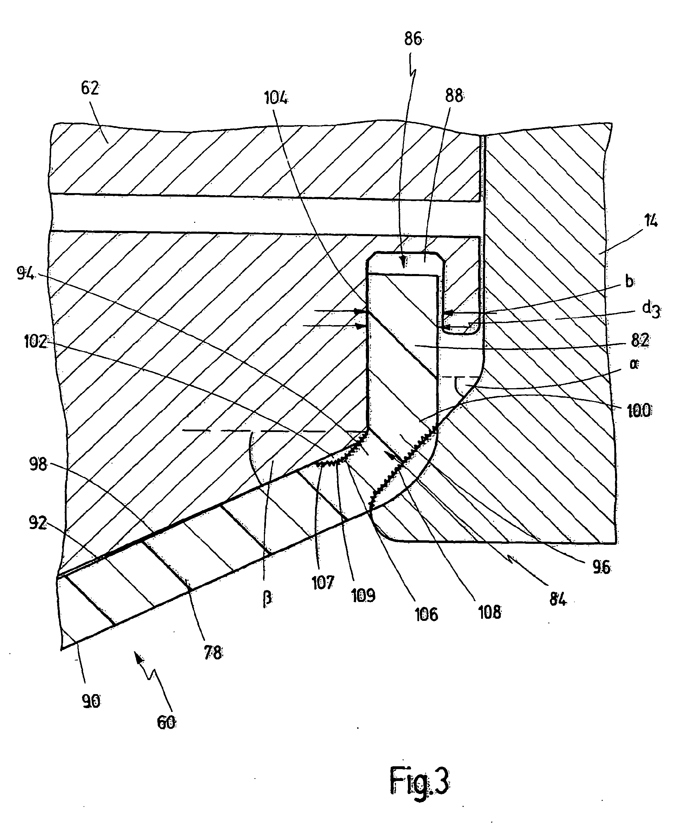

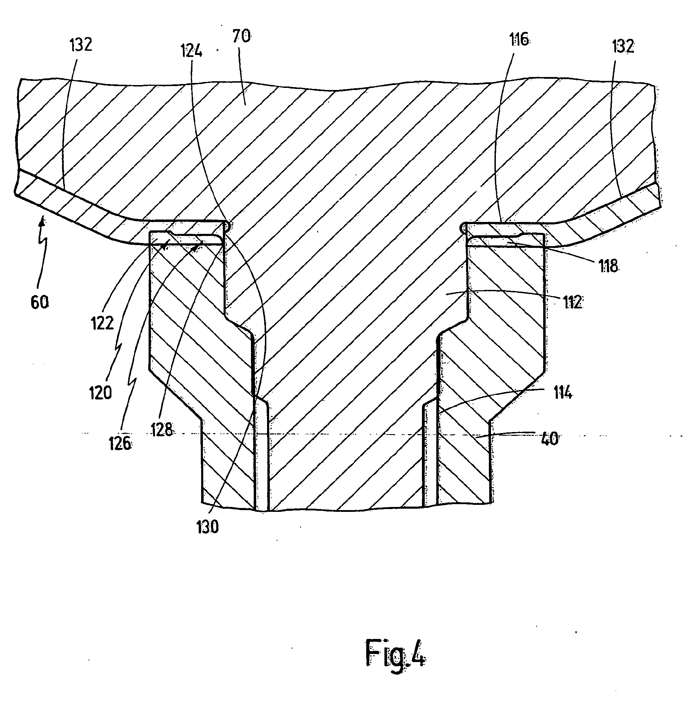

Fig. 3 und 4 zeigen vergrößerte Ansichten der Abdichtmanschette 60 in ihrer Einbaulage im Ventil 10.

Ein erster Abschnitt 82 eines radial äußeren Randbereichs 84 des Manschettenkörpers 78 ist in einer Aufnahme 86, hier in einer vollumfänglich ausgebildeten axialen Nut 88, des Aufnahmeelements 62 aufgenommen. Der erste Abschnitt 82 des radial äußeren Randbereichs 84 ist in axialer Richtung 48 relativ zum trichterförmigen Manschettenkörper 78 umgebogen (vgl. Fig. 2). Ein Durchmesser des radial äußeren Randbereichs 84 des Manschettenkörpers 78 entspricht etwa einem Durchmesser einer Umfangslinie der Nut 88. Eine Dicke d₃ der Abdichtmanschette 60 ist geringfügig kleiner als eine Breite b der Nut 88 ausgebildet, wodurch ein Einbringen des radial äußeren Randbereichs 84 in die Nut 88 besonders leicht durchgeführt werden kann. Die Nut 88 des Aufnahmeelements 62 ist zum Ventilgehäuseinneren 50 offen, so dass eine Außenseite 90 des Manschettenkörpers 78 zum Ventilgehäuseinneren 50 hin und eine Innenseite 92 des Manschettenkörpers 78 zur Spindel 42 des Stellantriebs 46 hinweist. Der erste Abschnitt 82 des radial äußeren Randbereichs 84 des Manschettenkörpers 78 kann bereits bei der Fertigung der Abdichtmanschette 60 entsprechend gebogen sein, um den ersten Abschnitt 82 des radial äußeren Randbereichs 84 besonders leicht in die Nut 88 einstecken zu können.

Um ein Herausrutschen der Abdichtmanschette 60 aus der Nut 88 zu verhindern, ist ein zweiter radial innerer Abschnitt 94 des radial äußeren Randbereichs 84 zwischen dem Ventilgehäuse 14 und dem Aufnahmeelement 62 radial eingespannt. Eine Ventilgehäusewand 96, die im Bereich des Ventilgehäuseflansches 56 angeordnet ist, presst den zweiten Abschnitt 94 des radial äußeren Randbereichs 84 gegen eine erste Aufnahmeelementwand 98 des Aufnahmeelementendbereichs 64. Hierdurch wird eine elastische Verformung des Manschettenkörpers 78 im Bereich der Ventilgehäusewand 96 bewirkt. Die Ventilgehäusewand 96 und die erste Aufnahmeelementwand 98 sind zum Ventilgehäuseinneren 50 hin bspw. unter einem Neigungswinkel α, β von etwa 20° bis 30° relativ zu einer radialen Richtung 99 geneigt, so dass der trichterförmige Manschettenkörper 78 im Bereich des zweiten Abschnitts 94 an der ersten Aufnahmeelementwand 98 anliegt. Der Neigungswinkel β der ersten Aufnahmeelementwand 98 ist kleiner als der Neigungswinkel α der Ventilgehäusewand 96 ausgebildet, so dass ein Anpressdruck der Ventilgehäusewand 96 auf den zweiten Abschnitt 94 des radial äußeren Randbereichs 84 der Abdichtmanschette 60 in einem Krümmbereich 100 des zweiten Abschnitts 94 des radial äußeren Randbereichs 84 erhöht wird. Dies bewirkt ein besonders gutes Verklemmen der Abdichtmanschette 60, wodurch eine optimale Abdichtung des Ventilgehäuseinneren 50 gegenüber dem Stellantrieb 46 erzeugt wird.

Die erste Aufnahmeelementwand 98 weist ferner einen vollumfänglich ausgebildeten Vorsprung 102 auf, dessen im Wesentlichen abgerundete Oberfläche frei von scharfen Kanten oder Ecken ist, so dass sich der Manschettenkörper 78 über diesen legt und keine Schnitte im Manschettenkörper 78 auftreten, die die Dichtigkeit der Abdichtmanschette 60 beeinträchtigen können. Der annähernd symmetrisch ausgestaltete Vorsprung 102 ist an der ersten Aufnahmeelementwand 98 direkt benachbart zur Nut 88 angeordnet und verringert einen Zwischenraum zwischen der ersten Aufnahmeelementwand 98 und der Ventilgehäusewand 96, da sich der Zwischenraum in Richtung des Ventilgehäuseinneren 50 verkleinert. Ferner greift der Vorsprung 102 formschlüssig in den Manschettenkörper 78 ein und bewirkt in diesem Bereich eine plastische Verformung des Manschettenkörpers 78. Hierdurch wird die Klemmwirkung auf die Abdichtmanschette 60 verbessert.

Durch das Verklemmen des radial äußeren Randbereichs 84 im Krümmbereich 100 liegt der Manschettenkörper 78 an einer radial inneren Nutwand 104 und der ersten Aufnahmeelementwand 98 des Aufnahmeelements 62 an. Hierdurch wird eine besonders hohe Dichtigkeit der Abdichtmanschette 60 im Bereich des radial äußeren Randbereichs 84 bewirkt. Das Material der Abdichtmanschette 60, das im Krümmbereich 100 zusammengedrückt wird, kann bspw. in Richtung eines Nutendes fließen und einen freien Raum der Nut 88 ausfüllen.

Die Ventilgehäusewand 96 und die erste Aufnahmeelementwand 98 weisen ferner jeweils eine Riffelung 106, 107 mit jeweils zumindest einer in Fig. 3 spitz dargestellten Rippe 108, 109 im Bereich des zweiten Abschnitts 94 des radial äußeren Bereichs 84 der Abdichtmanschette 60 auf, die in das Material der Abdichtmanschette 60 formschlüssig eingreifen. Die Riffelung 107 der ersten Aufnahmeelementwand 98 ist vorzugsweise auf der Oberfläche des Vorsprungs 102 angeordnet, so dass sich die Rippen 109 während des Verklemmens des radial äußeren Randbereichs 84 in das Material der Abdichtmanschette 60 drücken. Anstatt der Riffelungen 106, 107 können Zahnungen an der Ventilgehäusewand 96 und der ersten Aufnahmeelementwand 98 vorgesehen sein, die das Material der Abdichtmanschette 60 formschlüssig eingreifen. Es ist ebenfalls möglich, dass nur die erste Aufnahmeelementwand 98 oder die Ventilgehäusewand 96 mit den Riffelungen 107 bzw. 106 versehen sind.

Der Formschluss zwischen den Riffelungen 106, 107 der Abdichtmanschette 60 und dem Material der Abdichtmanschette 60 verhindert ebenfalls ein Verrutschen der Abdichtmanschette 60, so dass die Abdichtmanschette 60 noch sicherer im Ventil 10 gehalten wird. Der Formschluss bewirket ferner ein plastisches Verformen der Abdichtmanschette 60 im Bereich der Riffelungen 106, 107. Die Rippen 108, 109 der Riffelungen 106, 107 sind vorzugsweise vollumfänglich ausgebildet und verlaufen im Wesentlichen in Umfangsrichtung, d.h. quer zur axialen Richtung 48, um das sichere lagestabile Halten der Abdichtmanschette 60 weiter zu verbessern.

Die Abdichtmanschette 60 ist ferner in einem radial inneren Randbereich 110, der benachbart zur Öffnung 80 des Manschettenkörpers 78 angeordnet ist, zwischen dem Schaft 40 und der Spindel 42 axial eingespannt. Durch das Verschrauben eines mit einem Gewinde versehenden Zapfens 112 der Spindel 42 mit einer ebenfalls mit einem Gewinde versehener Sacklochbohrung 114 des Schafts 20 pressen Stirnseiten 116, 118 der Spindel 42 und des Schafts 40 gegeneinander, so dass der zweite Randbereich 110 des Manschettenkörpers 78 verklemmt ist. Die Abdichtmanschette 60 ist derart gefertigt, dass der radial innere Randbereich 110 des Manschettenkörpers 78 etwa senkrecht zum ersten Abschnitt 82 des radial äußeren Randbereichs 84 verläuft (vgl. Fig. 2).

Der Schaft 40 weist in einem radial äußeren Ringbereich 120 seiner Stirnseite 118, die zum Stellantrieb 46 und zum Manschettenkörper 78 zeigt, einen vollumfänglichen Vorsprung 122 auf, der durch das Einspannen des zweiten Randbereichs 110 in das Material der Abdichtmanschette 60 eingreift und dieses plastisch verformen kann. Der Vorsprung 122 ist von einem radial inneren Rand 124 des radial inneren Randbereichs 110 des Manschettenkörpers 78 radial beabstandet. Ein radial innerer Ringbereich 126 der Stirnseite 118 des Schafts 40 ist in radialer Richtung 99 gesehen eben ausgebildet und an seinem radial inneren Bereich 128 zur Spindel 42 hin abgerundet. Der radial innere Bereich 128 der Stirnseite 118 des Schafts 40 ist benachbart zum radial inneren Rand 124 des Manschettenkörpers 78 angeordnet. Die Stirnseite 116 der Spindel 42 ist in radialer Richtung 48 gesehen eben ausgebildet. Der Vorsprung 122 greift formschlüssig in den radial inneren Randbereich 110 des Manschettenkörpers 78 ein, so dass eine flüssigkeitsdichte axiale Verklemmung erreicht wird. Er verhindert ferner eine Hinterwanderung des Klemmbereichs durch Produkt, so dass das Material der Abdichtmanschette 60 im Einspannbereich nicht den Medien ausgesetzt wird. Das Eindringen des Vorsprungs 122 in das Material des radial inneren Randbereichs 110 kann eine plastische Materialdeformation verursachen. Das von dem Vorsprung 122 weggedrückte Material des radial inneren Randbereichs 110 fließt in Richtung der Spindel 42 und füllt einen Freiraum zwischen dem abgerundeten Bereich 128 der Stirnfläche 118 des Schafts 40 und einer Spindelseite 130 der Spindel 42 auf und drückt zusätzlich den radial inneren Rand 124 an der Innenseite 92 des Manschettenkörpers 78 elastisch gegen die Spindelseite 130. Hierdurch wird eine radiale Verklemmung der Abdichtmanschette 60 und eine besonders optimale Dichtwirkung erreicht.

Eine Spindelendbereichwand 132 benachbart zur Stirnseite 116 des Spindelendbereichs 70 weist etwa die gleiche Neigung wie die erste Aufnahmeelementwand 98 auf. Wenn der Ventilteller 22 auf dem Ventilsitz 26 abgesetzt ist, liegt der trichterförmige Manschettenkörper 78 der Abdichtmanschette 60 an der Spindelendbereichwand 128 an, da die Neigung jener der natürlichen Form der Abdichtmanschette 60 entspricht.

Ferner weist eine zweite, radial innere Aufnahmeelementwand 134 eine annähernd entgegengesetzte und betragsmäßige gleich große Neigung wie erste Aufnahmeelementwand 98 auf, an der die Abdichtmanschette 60 anliegt, wenn der Ventilteller 22 in das Ventilgehäuseinnere 50 bewegt wird. Die zweite Aufnahmeelementwand 134 unterstützt den Manschettenkörper 78 ebenfalls gegenüber Druckbelastungen aus dem Ventilgehäuseinneren 50.

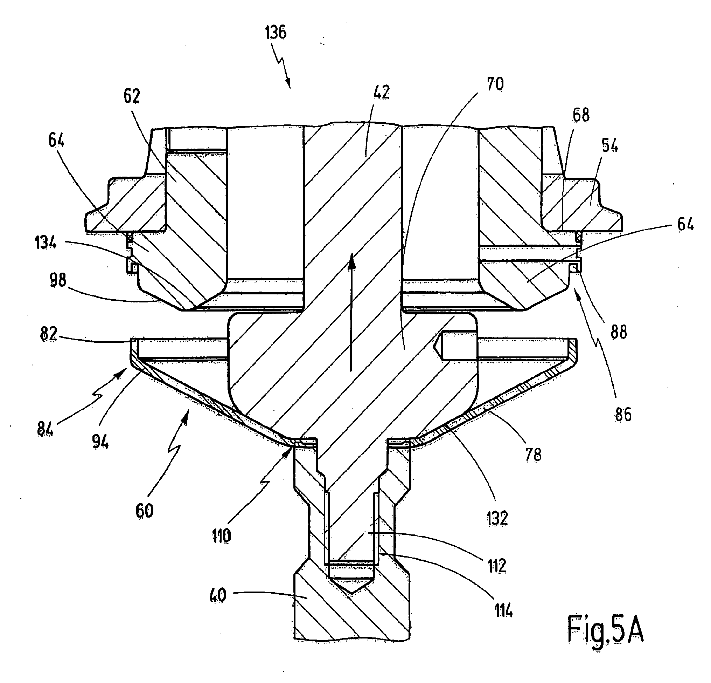

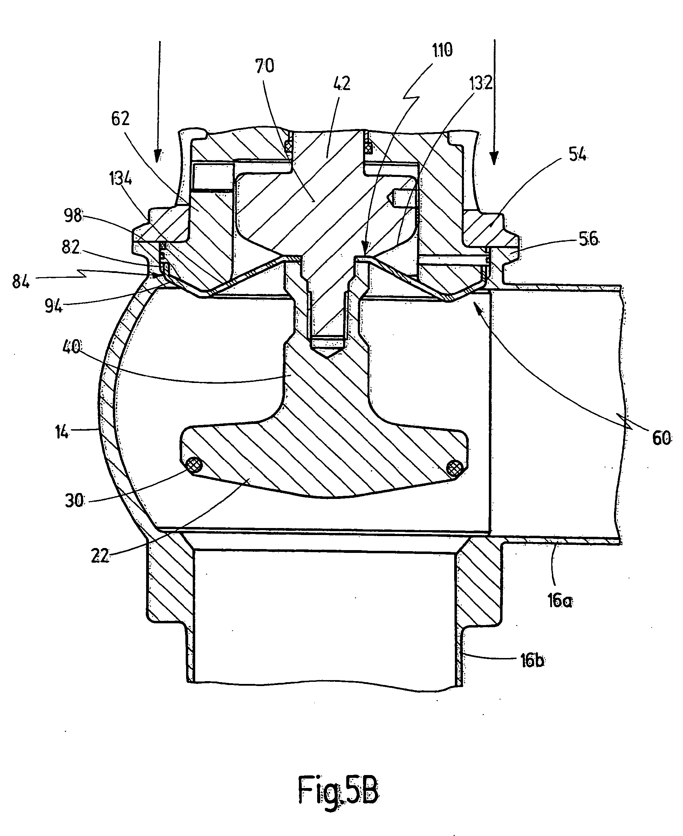

Figuren 5A-5C zeigen Einbaustadien 136-140 der Abdichtmanschette 60 in das Ventil 10. Bei dem in Fig. 5A gezeigten Stadium 136 ist die Abdichtmanschette 60 zwischen der Spindel 42 und dem Schaft 40 des Stellantriebs 46 eingespannt. Der radial innere Randbereich 110 der Abdichtmanschette 60 weist eine axiale und radiale Verklemmung auf, so dass eine hohe Dichtigkeit der Abdichtmanschette 60 in diesem Bereich bewirkt wird. Der radial äußere Randbereich 84 der Abdichtmanschette 60 ist noch nicht in die Nut 88 des Aufnahmeelements 62 aufgenommen.

Ausgehend von dem Einbaustadium 136 der Abdichtmanschette 60 wird zunächst der erste Abschnitt 82 des radial äußeren Randbereichs 84 der Abdichtmanschette 60 in die Nut 88 des Aufnahmeelements 62 eingebracht, indem das Antriebselement 32 derart betätigt wird, dass der Ventilteller 22 angehoben wird. Hierdurch wird der Manschettenkörper 78 der Abdichtmanschette 60 an die erste Aufnahmeelementwand 98 und die zweite Aufnahmeelementwand 134 angelegt, so dass die Abdichtmanschette 60 im Querschnitt gesehen etwa S-förmig verläuft. Die Abdichtmanschette 60 ist dabei konstruktiv so ausgelegt, dass sie beim Einfahren des Ventiltellers 22 selbständig in die Nut 88 eingeführt und in einer für die Verklemmung des radial äußeren Randbereichs 84 erforderlichen Stellung positioniert wird. Im Anschluss hieran wird bspw. manuell unter Sichtkontrolle überprüft, ob der erste Abschnitt 82 des radial inneren Randbereichs 84 des Manschettenkörpers 60 vollumfänglich in der Nut 88 aufgenommen ist. Der Stellantrieb 46 wird erst dann zusammen mit dem Ventilteller 22 und der Abdichtmanschette 60 in das Ventilgehäuse 14 eingesetzt (vgl. Fig. SB).

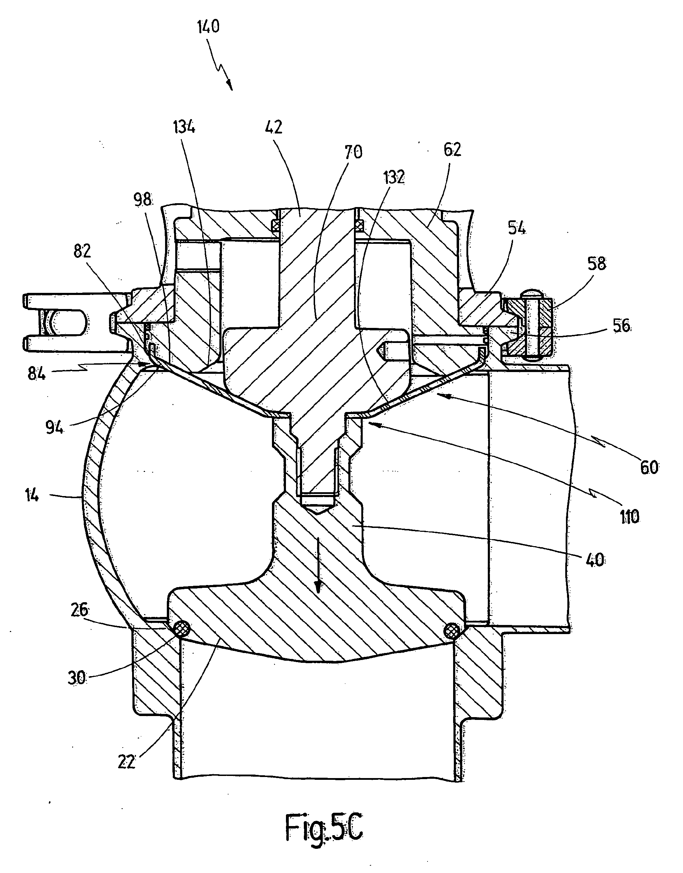

Bei dem in Fig. 5C gezeigten Einbaustadium 140 der Abdichtmanschette 60 in das Ventil 10 wird der Stellantrieb 46 derart betätigt, dass der Ventilteller 22 nach unten bewegt wird. Der Ventilteller 22 wird hierbei auf dem Ventilsitz 26 des Ventilgehäuses 14 abgesetzt, wodurch die Abdichtmanschette 60 wieder ihre trichterförmige Gestalt erreicht.

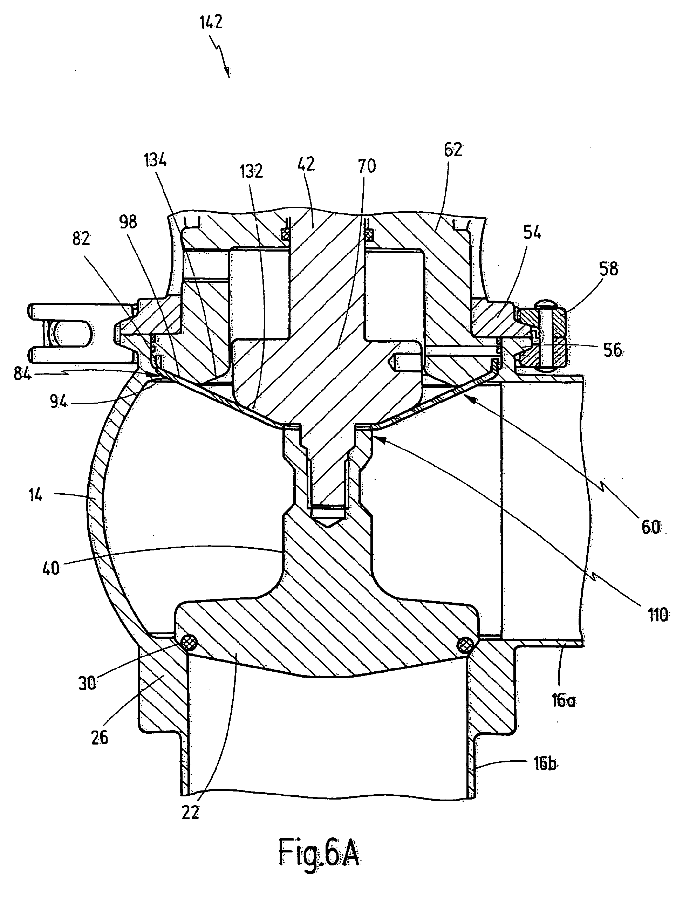

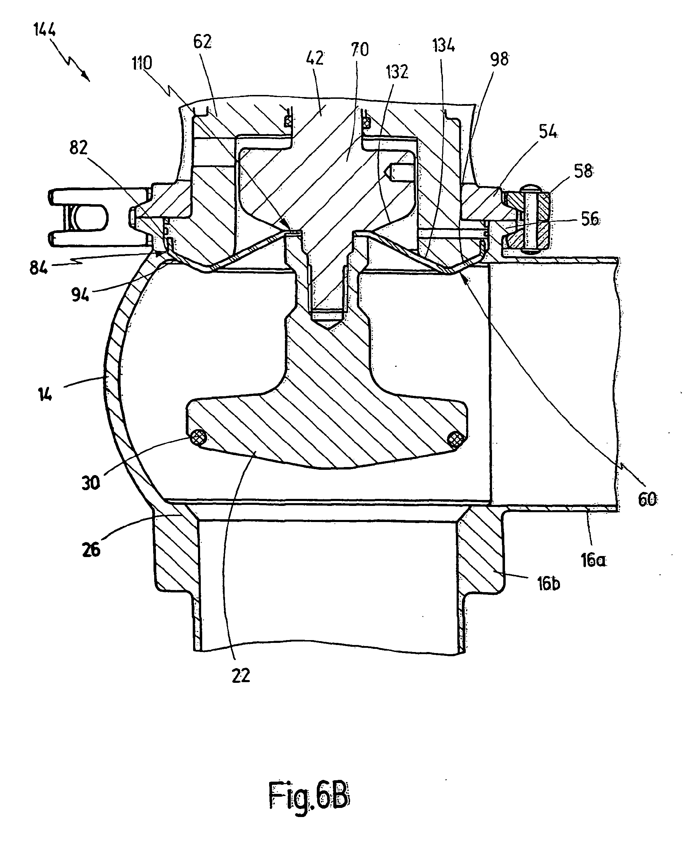

Figuren 6A, 6B zeigen zwei Betriebszustände 142, 142 des Ventils 10. In dem ersten Betriebszustand 142, der einer geschlossenen Ventilstellung entspricht, ist der Rohranschlussstutzen 16b gegenüber dem Rohranschlussstutzen 16a abgedichtet, da der Ventilteller 22 auf dem Ventilsitz 26 sitzt (vgl. Fig. 6A). Die Ringdichtung 30 im Randbereich 28 des Ventiltellers 22 bewirkt eine besonders hohe Dichtigkeit. Die Abdichtmanschette 60 weist hierbei ihre trichterförmige Gestalt auf.

In dem zweiten Betriebszustand 142 des Ventils 10, der einer geöffneten Ventilstellung entspricht, ist der Ventilteller 22 in Richtung des Stellantriebs 46 verschoben, so dass ein Durchtritt der Produktmedien vom Rohranschlussstutzen 16a in den Rohranschlussstutzen 16b ermöglicht ist. Da die Spindel 42 entlang der Mantelfläche 66 des Aufnahmeelements 62 in Richtung des Bodens 74 des Aufnahmeelements 62 bewegt ist, liegt die Abdichtmanschette 60 an der ersten und zweiten Aufnahmeelementwand 98, 130 an und weist die im Querschnitt gesehen S-förmige Form auf.

## Patentansprüche

1. Ventil zum Trennen von Produktmedien in Rohrleitungen (12a, b) einer produktführenden Anlage, mit einem Ventilgehäuse (14), einem in einem Ventilgehäuseinneren (50) des Ventilgehäuses (14) angeordneten Ventilkörper (18), einem in axialer Richtung (48) bewegbaren und mit dem Ventilkörper (10) verbundenen Antriebselement (32) zum Bewegen des Ventilkörpers (18), und mit einer Abdichtmanschette (60) zum antriebsseitigen Abdichten des Ventilgehäuseinneren (50), wobei die Abdichtmanschette (60) einen sich radial erstreckenden Manschettenkörper (78) mit einer radial inneren Öffnung (80) aufweist, durch die das Antriebselement (32) hindurchreicht, wobei der Manschettenkörper (78) einen radial äußeren Randbereich (84) und einen radial inneren Randbereich (110) aufweist, der die radial innere Öffnung (80) umgibt, wobei der radial äußere Randbereich (84) radial und der radial innere Randbereich (110) axial eingespannt ist, wobei die Abdichtmanschette (60) aus einem formstabilen Kunststoff gefertigt ist, der bis zumindest etwa 130°C temperaturbeständig ist, wobei ein erster Abschnitt (82) des radial äußeren Randbereichs (84) des Manschettenkörpers (78) in einer axial verlaufenden, vollumfänglichen Aufnahme (86) eines axial unbeweglichen Aufnahmeelements (62) aufgenommen ist, und wobei der radial äußere Randbereich (84) einen zweiten radial inneren Abschnitt (94) aufweist, der zwischen einer Ventilgehäusewand (96) des Ventilgehäuses (14) und einer ersten Aufnahmeelementwand (98) des Aufnahmeelements (62) eingespannt ist, **dadurch gekennzeichnet, dass** die erste Aufnahmeelementwand (98) einen Vorsprung (102) aufweist, der im Bereich des zweiten Abschnitts (94) des radial äußeren Randbereichs (84) des Manschettenkörpers (78) angeordnet ist.

2. Ventil nach Anspruch 1, **dadurch gekennzeichnet, dass** der Kunststoff der Abdichtmanschette (60) bis zumindest etwa 150°C, vorzugsweise bis zumindest etwa 165°C, weiter vorzugsweise bis zumindest etwa 180°C temperaturbeständig ist.

3. Ventil nach Anspruch 1 oder 2, **dadurch gekennzeichnet, dass** der Kunststoff der Abdichtmanschette (60) chemisch beständig ist.

4. Ventil nach einem der Ansprüche 1 bis 3, **dadurch gekennzeichnet, dass** der Kunststoff der Abdichtmanschette (60) ein vernetztes Schichtmaterial ist.

5. Ventil nach einem der Ansprüche 1 bis 4, **dadurch gekennzeichnet, dass** eine Breite (b) der Aufnahme (86) geringfügig größer als eine Dicke (d₃) des Manschettenkörpers (78) ist.

6. Ventil nach einem der Ansprüche 1 bis 5, **dadurch gekennzeichnet, dass** die Aufnahme (86) zum Ventilgehäuseinneren (50) hin offen ist.

7. Ventil nach einem derAnsprüche 1 bis 6, **dadurch gekennzeichnet, dass** der zweite Abschnitt (94) des radial äußeren Randbereichs (84) an der ersten Aufnahmeelementwand (98) anliegt.

8. Ventil nach einem der Ansprüche 1 bis 7, **dadurch gekennzeichnet, dass** die Ventilgehäusewand (96) und die erste Aufnahmeelementwand (98) zum Ventilgehäuseinneren (50) geneigt sind, wobei ein Neigungswinkel α der Ventilgehäusewand (96) relativ zu einer radialen Richtung (99) größer als ein Neigungswinkel β der ersten Aufnahmeelementwand (98) relativ zur radialen Richtung (99) ist.

9. Ventil nach einem der Ansprüche 1 bis 8, **dadurch gekennzeichnet, dass** der Vorsprung (102) vollumfänglich ausgebildet ist.

10. Ventil nach einem der Ansprüche 1 bis 9, **dadurch gekennzeichnet, dass** die Ventilgehäusewand (96) im Bereich des zweiten Abschnitts (94) des radial äußeren Randbereichs (84) eine Riffelung (106) mit zumindest einer Rippe (108) aufweist, die in das Material des Manschettenkörpers (78) formschlüssig eingreift.

11. Ventil nach einem der Ansprüche 1 bis 10, **dadurch gekennzeichnet, dass** die Aufnahmeelementwand (98) im Bereich des zweiten Abschnitts (94) des radial äußeren Randbereichs (84) eine Riffelung (107) mit zumindest einer Rippe (109) aufweist, die in das Material des Manschettenkörpers (60) formschlüssig eingreift.

12. Ventil nachAnspruch 11, **dadurch gekennzeichnet, dass** die Riffelung (107) der ersten Aufnahmeelementwand (98) auf einer Oberfläche des Vorsprungs (102) angeordnet ist.

13. Ventil nach einem der Ansprüche 10 bis 12, **dadurch gekennzeichnet, dass** die zumindest eine Rippe (108, 109) der Riffelung (106, 107) der Ventilgehäusewand (96) und/oder der Aufnahmeelementwand (98) in Umfangsrichtung verlaufen.

14. Ventil nach einem der Ansprüche 11 bis 13, **dadurch gekennzeichnet, dass** die zumindest eine Rippe (108, 109) der Riffelung (106, 107) der Ventilgehäusewand (96) und/oder der Aufnahmeelementwand (98) vollumfänglich ausgebildet ist.

15. Ventil nach einem der Ansprüche 1 bis 14, **dadurch gekennzeichnet, dass** der radial innere Randbereich (84) des Manschettenkörpers (78) zwischen einem ersten Element (34) und einem zweiten Element (36) des Antriebselements (32) eingespannt ist, wobei eine zum Manschettenkörper (78) gewandte Stirnseite (118) des ersten Elements (34) einen zum Manschettenkörper (78) hin gewandten Vorsprung (122) aufweist, der in den radial inneren Randbereich (110) des Manschettenkörpers (78) eingreift.

16. Ventil nach Anspruch 15, **dadurch gekennzeichnet, dass** der Vorsprung (122) von einem inneren Rand (124) des radial inneren Randbereichs (110) des Manschettenkörpers (78) radial beabstandet ist.

17. Ventil nach Anspruch 15 oder 16, **dadurch gekennzeichnet, dass** der Vorsprung (122) vollumfänglich ausgebildet ist.

18. Ventil nach einem der Ansprüche 15 bis 17, **dadurch gekennzeichnet, dass** ein Bereich (128) der Stirnseite (118) des ersten Elements (34), die zum radial inneren Rand (124) des radial inneren Randbereichs (110) des Manschettenkörpers (78) benachbart ist, radial nach innen gesehen abgerundet ist.

## Claims

1. A valve for separating product media in pipes (12a, b) of a product-carrying system, comprising a valve housing (14), a valve body (18) arranged in a valve housing interior (50) of the valve housing (14), a drive element (32) which is movable in the axial direction (48), being connected to the valve body (16) and is intended for moving the valve body (16), and further comprising a sealing diaphragm (60) for sealing the valve housing interior (50) on the drive side, wherein the sealing diaphragm (60) has a radially extending diaphragm body (78) with a radially inner opening (80) through which the drive element (32) reaches, wherein the diaphragm body (78) has a radially outer edge region (84) and a radially inner edge region (110) surrounding the radially inner opening (80), wherein the radially outer edge region (84) is clamped radially and the radially inner edge region (110) is clamped axially, wherein the sealing diaphragm (60) is manufactured from a dimensionally stable plastic which is thermally resistant up to at least approximately 130°C, wherein a first section (82) of the radially outer edge region (84) of the diaphragm body (78) is received in an axially extending seat (86) which extends about the full circumference of an axially immovable receiving element (62), and wherein the radially outer edge region (84) has a second, radially inner section (94) which is clamped between a valve housing wall (96) of the valve housing (14) and a first receiving element wall (98) of the receiving element (62), **characterized in that** the first receiving element wall (98) has a projection (102) which is arranged in the region of the second section (94) of the radially outer edge region (84) of the diaphragm body (78).

2. The valve of claim 1, **characterized in that** the plastic of the sealing diaphragm (60) is thermally resistant up to at least approximately 150°C, preferably up to at least approximately 165°C, and furthermore preferably up to at least approximately 180°C.

3. The valve of claim 1 or 2, **characterized in that** the plastic of the sealing diaphragm (60) is chemically resistant.

4. The valve of any of claims 1 through 3, **characterized in that** the plastic of the sealing diaphragm (60) is a crosslinked laminated material.

5. The valve of any of claims 1 through 4, **characterized in that** a width (b) of the seat (86) is slightly larger than a thickness (d₃) of the diaphragm body (78).

6. The valve of any of claims 1 through 5, **characterized in that** the seat (86) is open toward the valve housing interior (50).

7. The valve of any of claims 1 through 6, **characterized in that** the second section (94) of the radially outer edge region (84) bears against the first receiving element wall (98).

8. The valve of any of claims 1 through 7, **characterized in that** the valve housing wall (96) and the first receiving element wall (98) are inclined toward the valve housing interior (50), an angle of inclination α of the valve housing wall (96) relative to a radial direction (99) being greater than an angle of inclination β of the first receiving element wall (98) relative to the radial direction (99).

9. The valve of any of claims 1 through 8, **characterized in that** the projection (102) is designed in a manner extending about the full circumference.

10. The valve of any of claims 1 through 9, **characterized in that**, in the region of the second section (94) of the radially outer edge region (84), the valve housing wall (96) has a ribbing (106) with at least one rib (108) which engages in a form-fitting manner in the material of the diaphragm body (78).

11. The valve of any of claims 1 through 10, **characterized in that**, in the region of the second section (94) of the radially outer edge region (84), the receiving element wall (98) has a ribbing (107) with at least one rib (109) which engages in a form-fitting manner in the material of the diaphragm body (60).

12. The valve of claim 11, **characterized in that** the ribbing (107) of the first receiving element wall (98) is arranged on a surface of the projection (102).

13. The valve of any of claims 10 through 12, **characterized in that** the at least one rib (108, 109) of the ribbing (106, 107) of the valve housing wall (96) and/or of the receiving element wall (98) extend in circumferential direction.

14. The valve of any of claims 11 through 13, **characterized in that** the at least one rib (108, 109) of the ribbing (106, 107) of the valve housing wall (96) and/or of the receiving element wall (98) is designed in a manner extending about the full circumference.

15. The valve of any of claims 1 through 14, **characterized in that** the radially inner edge region (84) of the diaphragm body (78) is clamped between a first element (34) and a second element (36) of the drive element (32), an end side (118) of the first element (34), which end side faces the diaphragm body (78), having a projection (122) which faces the diaphragm body (78) and engages in the radially inner edge region (110) of the diaphragm body (78).

16. The valve of claim 15, **characterized in that** the projection (122) is spaced apart radially from an inner edge (124) of the radially inner edge region (110) of the diaphragm body (78).

17. The valve of claim 15 or 16, **characterized in that** the projection (122) is designed in a manner extending about the full circumference.

18. The valve of any of claims 15 through 17, **characterized in that** a region (128) of the end side (118) of the first element (34), which end side is adjacent to the radially inner edge (124) of the radially inner edge region (110) of the diaphragm body (78), is rounded as seen radially inward.

## Revendications

1. Soupape servant à séparer des milieux de produit dans des canalisations (12a, b) d'une installation acheminant des produits, comportant un boîtier de soupape (14), un corps de soupape (18) disposé dans l'intérieur d'un boîtier de soupape (50) du boîtier de soupape (14), un élément d'entraînement (32) pouvant être déplacé dans une direction axiale (48), relié au corps de soupape (10) et servant à déplacer le corps de soupape (18), et un joint d'étanchéité (60) servant à assurer l'étanchéité côté entraînement de l'intérieur du boîtier de soupape (50), le joint d'étanchéité (60) présentant un corps de joint (78) s'étendant radialement et doté d'une ouverture (80) radialement intérieure, laquelle est traversée par l'élément d'entraînement (32), le corps de joint (78) présentant une zone de bord (84) radialement extérieure et une zone de bord radialement intérieure (110), laquelle entoure l'ouverture (80) radialement intérieure, la zone de bord radialement extérieure (84) étant enserrée radialement et la zone de bord radialement intérieure (110) est enserrée axialement, le joint d'étanchéité (60) étant fabriqué à partir d'une matière plastique à forme stable, laquelle résiste à des températures allant au moins jusqu'à environ 130°C, une première section (82) de la zone de bord radialement extérieure (84) du corps de joint (78) étant logée dans un logement (86) intégralement périphérique s'étendant axialement d'un élément de réception (62) non mobile axialement, et la zone de bord radialement extérieure (84) présentant une deuxième section (94) radialement intérieure, qui est enserrée entre une paroi de boîtier de soupape (96) du boîtier de soupape (14) et une première paroi de l'élément de réception (98) de l'élément de réception (62), **caractérisée en ce que** la première paroi de l'élément de réception (98) présente une partie faisant saillie (102) qui est disposée dans la zone de la deuxième section (94) de la zone de bord radialement extérieure (84) du corps de joint (78).

2. Soupape selon la revendication 1, **caractérisée en ce que** la matière plastique du joint d'étanchéité (60) résiste à des températures allant au moins jusqu'à environ 150°C, de préférence jusqu'à au moins environ 165°C, de manière plus préférée jusqu'à au moins environ 180°C.

3. Soupape selon la revendication 1 ou 2, **caractérisée en ce que** la matière plastique du joint d'étanchéité (60) est résistante d'un point de vue chimique.

4. Soupape selon l'une quelconque des revendications 1 à 3, **caractérisée en ce que** la matière plastique du joint d'étanchéité (60) est un matériau stratifié réticulé.

5. Soupape selon l'une quelconque des revendications 1 à 4, **caractérisée en ce qu'**une largeur (b) du logement (86) est légèrement plus grande qu'une épaisseur (d₃) du corps de joint (78).

6. Soupape selon l'une quelconque des revendications 1 à 5, **caractérisée en ce que** le logement (86) est ouvert en direction de l'intérieur de boîtier de soupape (50).

7. Soupape selon l'une quelconque des revendications 1 à 6, **caractérisée en ce que** la deuxième section (94) de la zone de bord radialement extérieure (84) repose sur la première paroi d'élément de réception (98).

8. Soupape selon l'une quelconque des revendications 1 à 7, **caractérisée en ce que** la paroi de boîtier de soupape (96) et la première paroi d'élément de réception (98) sont inclinées en direction de l'intérieur de boîtier de soupape (50), sachant qu'un angle d'inclinaison α de la paroi de boîtier de soupape (96) par rapport à une direction radiale (99) est plus grand qu'un angle d'inclinaison ß de la première paroi d'élément de réception (98) par rapport à une direction radiale (99).

9. Soupape selon l'une quelconque des revendications 1 à 8, **caractérisée en ce que** la partie faisant saillie (102) est réalisée de manière intégralement périphérique.

10. Soupape selon l'une quelconque des revendications 1 à 9, **caractérisée en ce que** la paroi de boîtier de soupape (96) présente dans la zone de la deuxième section (94) de la zone de bord radialement extérieure (84) un striage (106) doté d'au moins une nervure (108), qui vient en prise par complémentarité de forme avec le matériau du corps de joint (78).

11. Soupape selon l'une quelconque des revendications 1 à 10, **caractérisée en ce que** la paroi d'élément de réception (98) présente dans la zone de la deuxième section (94) de la zone de bord radialement extérieure (84) un striage (107) doté d'au moins une nervure (109), qui vient en prise par complémentarité de forme avec le matériau du corps de joint (60).

12. Soupape selon la revendication 11, **caractérisée en ce que** le striage (107) de la première paroi d'élément de réception (98) est disposé sur une surface de la partie faisant saillie (102).

13. Soupape selon l'une quelconque des revendications 10 à 12, **caractérisée en ce que** la nervure (108, 109) au moins au nombre de une du striage (106, 107) de la paroi de boîtier de soupape (96) eUou de la paroi d'élément de réception (98) s'étend dans la direction périphérique.

14. Soupape selon l'une quelconque des revendications 11 à 13, **caractérisée en ce que** la nervure (108, 109) au moins au nombre de une du striage (106, 107) de la paroi de boîtier de soupape (96) et/ou de la paroi d'élément de réception (98) est réalisée de manière intégralement périphérique.

15. Soupape selon l'une quelconque des revendications 1 à 14, **caractérisée en ce que** la zone de bord radialement intérieure (84) du corps de joint (78) est enserrée entre un premier élément (34) et un deuxième élément (36) de l'élément d'entraînement (32), un côté frontal (118) du premier élément (34), tourné en direction du corps de joint (78), présentant une partie faisant saillie (122) tournée en direction du corps de joint (78), laquelle partie faisant saillie vient en prise avec la zone de bord radialement intérieure (110) du corps de joint (78).

16. Soupape selon la revendication 15, **caractérisée en ce que** la partie faisant saillie (122) est espacée radialement d'un bord intérieur (124) de la zone de bord radialement intérieure (110) du corps de joint (78).

17. Soupape selon la revendication 15 ou 16, **caractérisée en ce que** la partie faisant saillie (122) est réalisée de manière intégralement périphérique.

18. Soupape selon l'une quelconque des revendications 15 à 17, **caractérisée en ce qu'**une zone (128) du côté frontal (118) du premier élément (34) est arrondie vue radialement vers l'intérieur, le côté frontal étant adjacent au bord radialement intérieur (124) de la zone de bord radialement intérieure (110) du corps de joint (78).
